# EUROPEAN PATENT APPLICATION

(11) **EP 4 546 591 A1**
(43) Date of publication of application: **30.04.2025**
(21) Application number: 23827556.4
(22) Date of filing: 23.06.2023
(51) Int. Cl.: H02H 9/02, H02J 7/35, H02M 1/00, H02M 1/092, H02M 3/335, H02J 3/32

(54) **POWER CONVERSION DEVICE**

(30) Priority: 23.06.2022 KR 20220077140; 23.06.2022 KR 20220077141; 23.06.2022 KR 20220077143
(71) Applicant: LG INNOTEK CO., LTD., Seoul 07796 (KR)
(72) Inventor: LEE, Jong Hyun, Seoul 07796 (KR); JUNG, Da Ul, Seoul 07796 (KR); NAM, Won Seok, Seoul 07796 (KR); PARK, Heo Kyoung, Seoul 07796 (KR)
(74) Representative: M. Zardi & Co S.A.
(86) International application number: PCT/KR2023/008721
(87) International publication number: WO 2023/249447

(57) **Abstract**

A power conversion device according to an embodiment of the present invention comprises: a power conversion unit that converts and outputs input power; an auxiliary power unit that receives power from a first input/output terminal of the power conversion unit to generate auxiliary power of the power conversion unit; a breaker connected to a second input/output terminal of the power conversion unit, wherein the auxiliary power unit operates when the breaker is turned on and stops operation when the breaker is turned off.

## Description

### [Technical Field]

The teachings in accordance with exemplary and non-limiting embodiments of this invention relate generally to a power converting apparatus (hereinafter referred to as 'power conversion device'), and more particularly to a power conversion device capable of storing log information in the event of a fault, and to an energy storage device comprising the same.

### [Background Arts]

With the recent increase in environmental awareness, there has been a growing interest in generating electricity without emitting pollutants such as carbon dioxide. In particular, photovoltaic power generation systems are becoming increasingly popular as the development and installation costs of such systems have become cheaper thanks to technological advances.

In such a photovoltaic power generation system, a plurality of photovoltaic cells are gathered to form a plurality of photovoltaic modules, and the DC power generated by the plurality of photovoltaic modules is converted into AC power through an inverter, which can be used directly in homes and industrial facilities.

On the other hand, in the case of photovoltaic power generation, there are inevitably periods of time when there is not enough power generation, such as at night when there is no sunlight or due to changes in weather conditions. Therefore, to compensate for these disadvantages, photovoltaic power generation systems must be equipped with batteries to ensure a stable power supply.

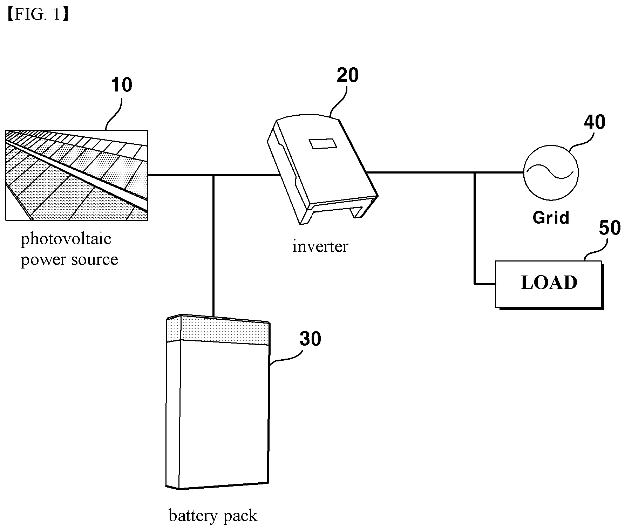

A home solar (photovoltaic) system with a battery can be configured as shown in FIG. 1. The inside of the battery pack may comprise a battery, a BMS, and a DC-DC converter. In this case, it is necessary to develop a technology that prevents the DC-DC converter inside the battery pack from burning out or operating abnormally due to abnormal operation, so that normal operation can be achieved.

### [Detailed Description of the Invention]

### [Technical Problems]

The technical problems that the present invention seeks to solve are to provide a power conversion device and an energy storage device comprising the same that can store log information in the event of a fault.

### [Technical solutions]

To address the above technical challenges, a power conversion device according to an exemplary embodiment of the present invention may comprise: a power conversion unit that converts and outputs input power; an auxiliary power unit that receives power from a first input/output terminal of the power conversion unit to generate auxiliary power of the power conversion unit; a breaker connected to a second input/output terminal of the power conversion unit, wherein the auxiliary power unit operates when the breaker is turned on and stops operation after a predetermined period of time when the breaker is turned off,

Preferably, but not necessarily, the auxiliary power unit may comprise: a transformer for converting power from the first input/output terminal; a driving unit for driving the transformer in response to a first signal applied from the breaker when the breaker is turned on; and a controller for receiving auxiliary power outputted from the transformer and controlling the driving unit to drive the transformer.

Preferably, but not necessarily, the driving unit may be capable of maintaining the driving of the transformer in at least one of the cases where a first signal is applied from the breaker and where the driving unit is controlled to drive the transformer by the controller.

Preferably, but not necessarily, the controller may control the driving unit to maintain the driving of the transformer for a predetermined period of time when the breaker is turned off and a second signal is applied from the breaker.

Preferably, but not necessarily, while the driving unit maintains the driving of the transformer, the controller may store log information comprising at least one of the following: previous operation information, fault status, fault type, and fault location.

Preferably, but not necessarily, the auxiliary power unit may comprise: a first switch connected at one end to the first input/output terminal; a transformer connected at the other end of the first switch and converting power from the first input/output terminal; a driving unit connected to a first (-) terminal of the transformer and driving the transformer according to a first signal applied from the breaker when the breaker is turned on; a capacitor that is charged according to the output of the transformer to generate an auxiliary power unit; a second switch connected at one end to a first node between the breaker and the driving unit, the other end of which is connected to ground; and a controller that, upon receiving the auxiliary power unit, turns on the second switch.

Preferably, but not necessarily, the first signal may have a potential corresponding to the ground, and when the second switch is switched on, ground is connected to the first node, causing the driving unit to drive the transformer.

Preferably, but not necessarily, the driving unit may maintain the driving of the transformer in at least one of the cases where the first signal is applied from the breaker and where the second switch is tuned on.

Preferably, but not necessarily, the first switch may be a MOSFET and a gate may be connected to the first node.

To address the above technical challenges, an energy storage device according to an exemplary embodiment of the present invention may comprise: an energy storage unit including one or more batteries; a power conversion unit for converting power stored in the energy storage unit and outputting it to the outside, or converting power received from the outside and charging the energy storage part; an auxiliary power unit for generating an auxiliary power of the power conversion unit by receiving power from a first input/output of the power conversion unit connected to the energy storage unit; and a breaker connected to a second input/output of the power conversion unit connected to the outside, the auxiliary power unit being driven when the breaker is turned on and stopping the driving after a predetermined period of time when the breaker is turned off.

Preferably, but not necessarily, the auxiliary power unit may comprise: a transformer for converting power from the first input/output terminal; a driving unit for driving the transformer in accordance with a first signal applied from the breaker when the breaker is turned on; and a controller for receiving auxiliary power outputted from the transformer and controlling the driving unit to drive the transformer, the driving unit being capable of maintaining the driving of the transformer in at least one of the cases where the first signal is applied from the breaker and where the driving unit is controlled to drive the transformer by the controller.

Preferably, but not necessarily, an auxiliary power unit may include: a first switch connected at one end to the first input/output terminal; a transformer connected at the other end of the first switch to convert power from the first input/output terminal; a driving unit connected to the first (-) terminal of the transformer and driving the transformer according to a first signal applied from the breaker when the breaker is turned on; a capacitor charged according to the output of the transformer to generate an auxiliary power; a second switch connected at one end to a first node between the breaker and the driving unit and connected at the other end to ground; and a controller for applying the auxiliary power and turning on the second switch, the first signal having a potential corresponding to the ground, the ground being connected to the first node when the second switch is turned on, the driving unit driving the transformer, the driving unit being capable of maintaining the driving of the transformer in at least one of the cases when a first signal is applied from the breaker and when the second switch is turned on.

To address the above technical challenges, a power conversion device according to a second exemplary embodiment of the present invention may comprise at least one switch that sets an identification number according to an on-off state, and has an identification number that differs from other power conversion devices according to the state of the switch.

Preferably, but not necessarily, the switch may include a first switch and a second switch, a first resistor connected at one end to the first switch and the other end connected to ground; and a second resistor connected at the other end connected to the second switch, the first switch connected at one end to a first voltage and connected at the other end to the first resistor, the second switch connected at one end to a first voltage and connected at the other end to the second resistor, a node between the first switch and the first resistor and a node between the second switch and the second resistor may be connected to a controller.

Preferably, but not necessarily, the power conversion device may be connected in parallel with the other power conversion devices.

Preferably, but not necessarily, it may include a communication unit for communicating with the outside using an identification number set by the switch.

Preferably, but not necessarily, it may include a power conversion unit that converts an inputted power to output the power; and a housing in which the power conversion unit is disposed inside, and the switch may be formed as a physical switch exposed outside of the housing.

Preferably, but not necessarily, when connected in parallel with other power conversion devices, the power conversion unit may include a termination switch unit for connecting a termination resistor when set to an identification number corresponding to the termination.

Preferably, but not necessarily, the termination switch unit may include a plurality of switches for connecting or disconnecting the termination resistor according to a communication method with an outside.

To address the above technical challenges, an energy storage device according to a second exemplary embodiment of the present invention, may comprise: an energy storage unit comprising one or more batteries; a power conversion unit for converting power stored in the energy storage unit and outputting it to the outside, or converting power received from the outside and charging the energy storage unit; a controller for controlling the power conversion unit; at least one switch for setting an identification number according to an ON-OFF state; and a communication unit for communicating with an inverter or the outside using the identification number, the identification number being different from other energy storage units connected in parallel according to the state of the switch.

Preferably, but not necessarily, the switch may include a first switch and a second switch, a first resistor connected at one end to the first switch and the other end connected to ground; and a second resistor connected at one end to the second switch and connected at the other end to ground, the first switch inputted at one end by a first voltage and connected at the other end to the first resistor, the second switch inputted at one end by a first voltage and connected at the other end by the second resistor, a node between the first switch and the first resistor and a node between the second switch and the second resistor being connected to the controller.

Preferably, but not necessarily, the switch may be formed as a physical switch exposed outside of the housing of the energy storage device.

Preferably, but not necessarily, it may comprise one or more termination switches connecting the termination resistors, if set to an identification number corresponding to the termination when connected in parallel with another energy storage device.

To address the above technical challenges, the initial charging circuit according to a third embodiment of the present invention may comprise a first switch connected between a first input/output terminal and a second input/output terminal; and a PTC element connected in series with the first switch, wherein the first switch is turned on until the voltage of the second input/output terminal corresponds to the voltage of the first input/output terminal.

Preferably, but not necessarily, when the current flowing through the first switch and the PTC element is above a threshold value, the PTC element may cut off the current.

Preferably, but not necessarily, the first input/output terminal may be connected to a battery, and the second input/output terminal may be connected to an inverter or DC-link terminal.

Preferably, but not necessarily, the initial charging circuit may further comprise a first capacitor connected to the second input/output terminal, and the first switch may be turned on until the voltage charged to the first capacitor is equal to the voltage of the battery.

Preferably, but not necessarily, the initial charging circuit may also include a second switch connected in parallel with the first switch and the PTC element, and when a voltage of the second input/output terminal corresponds to a voltage of the first input/output terminal, the first switch may be turned off and the second switch may be turned on.

To address the above technical challenges, an energy storage device according to a third embodiment of the present invention may comprise: an energy storage unit including one or more batteries; a power conversion unit for converting power stored in the energy storage unit and outputting it to the outside, or converting power received from the outside and charging the energy storage unit; an initial charging circuit for initially charging a voltage of a second input/output terminal connected to the outside, the initial charging circuit comprising: a first switch connecting the energy storage unit and the second input/output terminal; and a PTC element connected in series with the first switch, the first switch being turned on until the voltage of the second input/output terminal corresponds to the voltage of the energy storage unit.

Preferably, but not necessarily, when the current flowing through the first switch and the PTC element is above a threshold value, the PTC element may cut off the current.

Preferably, but not necessarily, the second input/output terminal may be connected to an inverter or a DC-link stage.

Preferably, but not necessarily, the device may comprise a second switch connected in parallel with the first switch and the PTC element, and when a voltage of the second input/output terminal corresponds to a voltage of the energy storage unit, the first switch may be turned off and the second switch may be turned on.

### [Advantageous Effects]

According to the exemplary embodiments of the present invention, by setting an identification number using a switch, it is possible to change the identification number after installation in the field, so that it can be installed without restrictions on installation, and it is possible to produce one type of product during production and set the identification number during installation, which improves the freedom of logistics management.

In addition, by configuring the initial charging circuit using a PTC element, the temperature rises when an overcurrent is applied due to an abnormal (short) condition of the inverter, and the resistance value of the initial charging circuit increases to prevent burnout of the initial charging circuit.

Furthermore, by enabling the auxiliary power unit to operate under the control of the breaker and MCU, a separate auxiliary (SMPS) ON/OFF switch can be eliminated, which reduces material costs and simplifies the operation sequence, and prevents product burnout due to irregular sequences by power holding of the auxiliary power circuit by the MCU 0ring circuit when the user manually turns off the breaker and turns it off due to a fault, and secures log storage time. After log storage is completed, the MCU Oring circuit is turned off to switch the product to minimum power mode to prevent battery overdischarge.

### [Brief Description of Drawings]

FIG. 1 is a diagram illustrating a photovoltaic power generation system with an insulation resistance measurement device according to an exemplary embodiment of the present invention.
FIG. 2 is a block diagram of a power conversion device according to an exemplary embodiment of the present invention.
FIG. 3 is a block diagram of a power conversion device according to a first exemplary embodiment of the present invention.
FIGS. 4 to 9 are drawings to illustrate a power conversion device according to a first exemplary embodiment of the present invention.
FIG. 10 is a block diagram of an energy storage device according to a first exemplary embodiment of the present invention.
FIG. 11 is a block diagram of a power conversion device according to a second exemplary embodiment of the present invention.
FIGS. 12 to 14 are drawings to illustrate a power conversion device according to a second embodiment of the present invention.
FIG. 15 is a block diagram of an energy storage device according to a second exemplary embodiment of the present invention.
FIG. 16 is a block diagram of a power conversion device according to a third exemplary embodiment of the present invention.
FIGS. 17 to 21 are drawings to illustrate a power conversion device according to a third exemplary embodiment of the present invention.
FIG. 22 is a block diagram of an energy storage device according to a third exemplary embodiment of the present invention.

### [Best Mode]

Hereinafter, exemplary embodiments of the present invention will be described in detail with reference to the accompanying drawings.

However, the present invention is not limited to the given exemplary embodiments described, but may be implemented in a variety of different forms, and one or more of components among the exemplary embodiments may be optionally combined or substituted between embodiments within the scope of the present invention.

Furthermore, terms (including technical and scientific terms) used in the embodiments of the present invention, unless expressly specifically defined and described, are to be interpreted in the sense in which they would be understood by a person of ordinary skill in the art to which the present invention belongs, and commonly used terms, such as dictionary-defined terms, are to be interpreted in light of their contextual meaning in the relevant art.

Furthermore, the terms used in the embodiments of the invention are intended to describe the embodiments and are not intended to limit the invention.

In this specification, the singular may include the plural unless the context otherwise requires, and references to "at least one (or more) of A and (or) B and C" may include one or more of any combination of A, B, and C that may be assembled.

In addition, the terms first, second, A, B, (a), (b), and the like may be used to describe components of embodiments of the invention. Such terms are intended only to distinguish one component from another, and are not intended to limit the nature or sequence or order of such components by such terms.

Furthermore, when a component is described as "connected," "coupled," or "attached" to another component, it can include cases where the component is "connected," "coupled," or "attached" to the other component directly, as well as cases where the component is "connected," "coupled," or "attached" to another component that is between the component and the other component.

Furthermore, when described as being formed or disposed "above" or "below" each component, "above" or "below" includes not only when two components are in direct contact with each other, but also when one or more other components are formed or disposed between the two components. Furthermore, when expressed as "above" or "below", it may include the meaning of upward as well as downward with respect to a single component.

Variations according to the present disclosure may include some configurations of each embodiment in combination with some configurations of other embodiments, i.e., a variation may include one embodiment of the various embodiments but omit some configurations and include some configurations of the corresponding other embodiments. Alternatively, the opposite may be true. The features, structures, effects, etc. described in the embodiments are included in at least one embodiment and are not necessarily limited to any one embodiment. Furthermore, the features, structures, effects, etc. exemplified in each embodiment may be combined or modified in other embodiments by one having ordinary knowledge in the field to which the embodiments belong. Accordingly, such combinations and variations should be construed as being within the scope of the embodiments.

FIG. 1 is a diagram illustrating a photovoltaic power generation system with an insulation resistance measurement device according to an exemplary embodiment of the present invention.

As shown in FIG. 1, a photovoltaic (solar) power system may include a photovoltaic power source (10), an inverter (20), a battery pack (30), and a load (50). However, it will be understood by one of ordinary skill in the relevant art that other general purpose components may be included in a photovoltaic power system in addition to those shown in FIG. 1. For example, the photovoltaic power system may further comprise a grid (GRID 40). Alternatively, in accordance with other embodiments, it will be understood by one of ordinary skill in the relevant art that some of the components shown in FIG. 1 may be omitted.

The photovoltaic (solar) power source (10) may include a plurality of photovoltaic modules comprising a plurality of photovoltaic cells, wherein the photovoltaic cells are composed of a P-type semiconductor and an N-type semiconductor bonded together to generate electricity from light. Specifically, when light is shone on the solar cell, electrons and holes are generated inside. The generated charges move to the P and N poles, respectively, and this action creates a potential difference between the P and N poles, and when a load is connected to the photovoltaic cell, current flows. Here, a photovoltaic cell is the smallest unit that generates electricity, and photovoltaic cells are assembled to form a cell module, and the cell modules can be further connected in series/parallel to form an array to form a photovoltaic power source 10.

The inverter (20) may convert DC power generated from the photovoltaic power source (10) by the photoelectric effect into AC power, for powering a grid (40) or a load (50). Here, the grid (40) may refer to a grid for transmitting and distributing power generated by the photovoltaic power system. On the other hand, the amount of power generated by the photovoltaic power source (10) is continuously changing due to temporal factors such as sunrise and sunset or external factors such as weather. Therefore, the inverter (20) may control the voltage generated by the photovoltaic power source (10) to find the maximum power and supply it to the grid (40). In this case, the inverter (20) may consume power from the grid (40) in reverse if the power required to operate the inverter is lower than the output power of the inverter. Of course, in this case, the inverter can prevent the power from being reversed by cutting off the power entering the grid (40).

Various optimizer control methods are applied to the photovoltaic power generation system to extract maximum power from the photovoltaic power source (10). Representative maximum power point (MPP) tracking methods of the photovoltaic power source (10) may include the PO (Perturbation and Observation) method, the IC (Incremental Conductance) control method, and the CV (Constant Voltage) control method. Here, the PO method is a method of periodically measuring the voltage and current of the photovoltaic power source (10) to calculate the power, and then using the power value to track the MPP. The IC control method is a method of measuring the voltage and current generated by the photovoltaic power source (10) and controlling it so that the change rate of the power in response to a change in the terminal voltage operating point of the array is '0'. The CV control method is a method of controlling a constant reference voltage (ref V) regardless of the operating voltage or power of the array comprising the photovoltaic power source (10). Depending on each optimizer control method, the power source inputted to the inverter from the photovoltaic power source (10) may operate as a voltage source or a current source.

The load (50) may refer to a product that utilizes a form of electricity used in real life. For example, the inverter (20) may obtain AC power of a desired voltage and frequency through a suitable conversion method, switching element, and control circuitry to supply electricity to household appliances or machinery in an industrial facility. In addition, in the case of photovoltaic power generation, there are inevitably periods of power generation at night when there is no sunlight or when there is not enough power generation due to changes in weather conditions. Therefore, to compensate for these disadvantages, a battery pack (30) is essential in a photovoltaic power generation system to provide a stable power supply.

The battery pack (30) may include at least one of a DC-DC converter, a battery, a battery management system (BMS), an energy storage system (ESS), and battery control circuitry. The battery may include a lithium-ion battery or a nickel-metal hydride battery, but is not necessarily limited to these configurations, and may refer to any battery that is semi-permanently usable by charging. A DC-DC converter is a device that converts DC power generated by the photovoltaic power source (10) into DC power suitable for the battery, or converts power from the battery into power suitable for the grid, typically by converting DC power to AC power and then converting AC power back to DC power. A battery management system (BMS) can provide the misuse protection for the cells that make up a battery, as well as balancing, state of charge (SOC), temperature management, or system monitoring. Therefore, based on a sensor that measures the state of the cell and a function that receives the measured value of the sensor and transmits it to the control system of the application, a circuit that generates an abnormal signal and shuts down or opens the power circuit between the cells when the temperature or state of charge of the system exceeds the set value can be built and controlled.

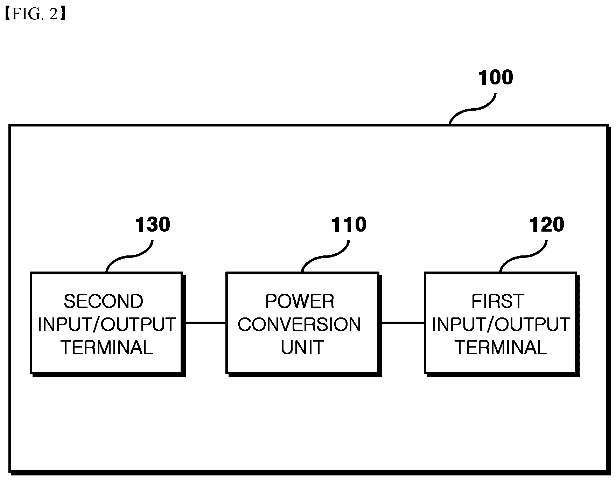

FIG. 2 is a block diagram of a power conversion device according to one exemplary embodiment of the present invention.

The power conversion device (100) according to one embodiment of the present invention comprises a power conversion unit (110), a first input/output terminal (120), a second input/output terminal (130), and may include an identification number setting unit (140), a controller (150), a communication unit (160), a terminal resistance setting unit (170), an initial charging circuit (180), an auxiliary power unit (190), and the like.

The power conversion device (100) according to an embodiment of the present invention may be a DC-DC converter included in the battery pack (30), and may be a bidirectional converter to serve to charge or discharge the battery inside the battery pack (30). The power conversion device (100) according to an embodiment of the present invention may comprise a module separate from the battery pack (30), which may be connected to the battery pack (30) to charge or discharge the battery inside the battery pack (30).

The power conversion device (110) converts the inputted power and outputs it, and can operate in both directions. When power is inputted to the first input/output terminal (120), it can be converted and outputted to the second input/output terminal (130), and when power is inputted to the second input/output terminal (130), it can be converted and outputted to the first input/output terminal (120). The first input/output terminal (120) may be connected to a battery, the energy storage unit (210), and the second input/output terminal (130) may be connected to an inverter, a DC link stage, or the outside. The first input/output terminal (120) and the second input/output terminal (130) may include a (+) terminal and a (-) terminal.

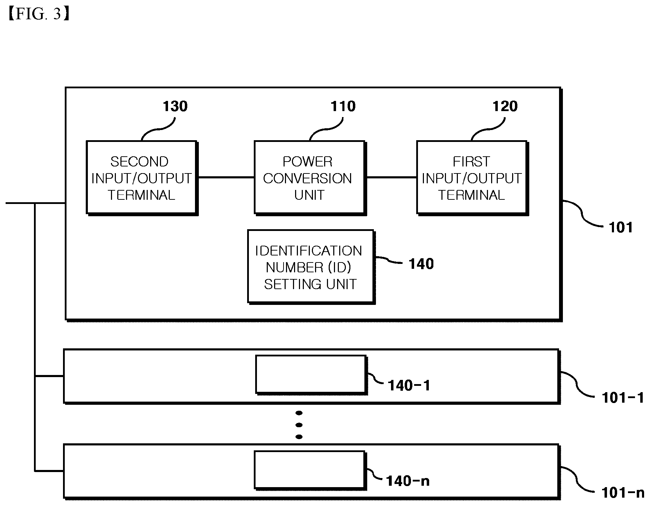

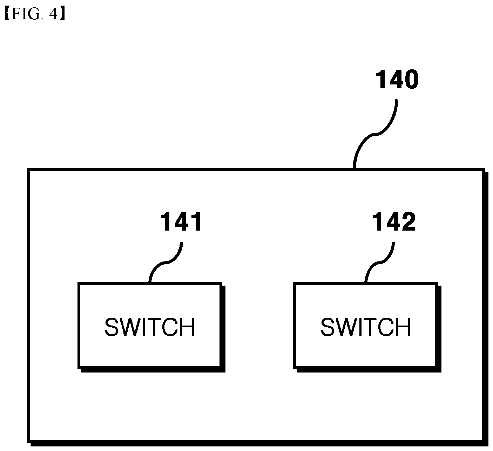

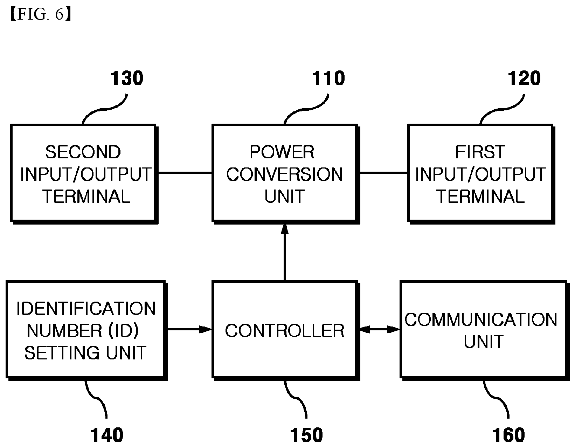

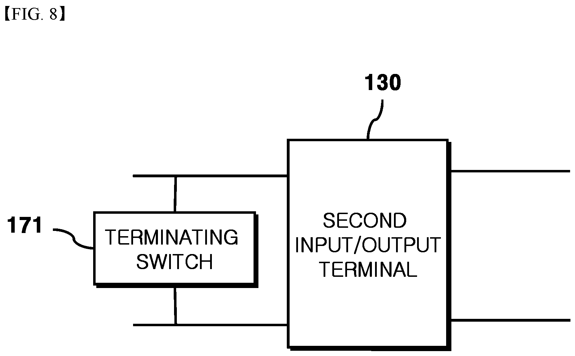

FIG. 3 is a block diagram of a power conversion device according to a first exemplary embodiment of the present invention, and FIGS. 4 to 9 are drawings to illustrate the power conversion device according to the first exemplary embodiment of the present invention.

The power conversion device (101) according to the first embodiment of the present invention includes an identification number (ID) setting unit (140).

The power conversion device (101) according to the first embodiment of the present invention may be connected in parallel with other power conversion devices (101-1 to 101-n). As described above, the power conversion device (101) according to the first embodiment of the present invention may be a DC-DC converter applied to an energy storage system (ESS) such as a battery pack, and a plurality of energy storage devices (to be used equivalently with ESS hereinafter) may be added in parallel to increase the capacity of the energy storage system. At this time, it is necessary to set a communication ID for each of the DC-DC converters, which are power conversion devices connected to each energy storage device, in order to facilitate communication with the inverter (20), which performs communication so that the plurality of energy storage devices connected in parallel can operate. For example, when four energy storage devices, i.e., four DC-DC converters, are connected in parallel, the communication IDs of Master (00), Slave1 (01), Slave2 (10), and Slave3 (11) may be set, respectively. For this purpose, the ID can be fixed through a resistor inside the DC-DC converter, and in this case, the Master and Slave must be produced separately, which complicates the production process and makes it impossible or difficult to exchange Master ↔ Slave in the field.

The power conversion device (101) of the first exemplary embodiment of the present invention may include at least one switch that sets an identification number according to an ON-OFF state, and has a different identification number from other power inverters depending on the state of the switch.

The state of the switch may represent a state value of ON or OFF, 0 or 1. Using these state (or status) values, the switch may have an identification number that is different from other power conversion devices depending on the state of the switch. One switch can have two state values of 0 or 1, and two switches can have four state values of 00, 01, 10, and 11.

The number of switches required may vary depending on the number of power conversion devices (101) for which identification numbers are to be set, i.e., the number of power conversion devices (101) connected in parallel. Hereinafter, an example of using two switches to set the identification numbers of four power conversion devices (101 to 101-n) will be described.

The identification number (ID) setting unit (140) may include two switches (141, 142), and each switch (141, 142) may have an identification number that is different from the other power conversion devices depending on the state of the switch (141, 142).

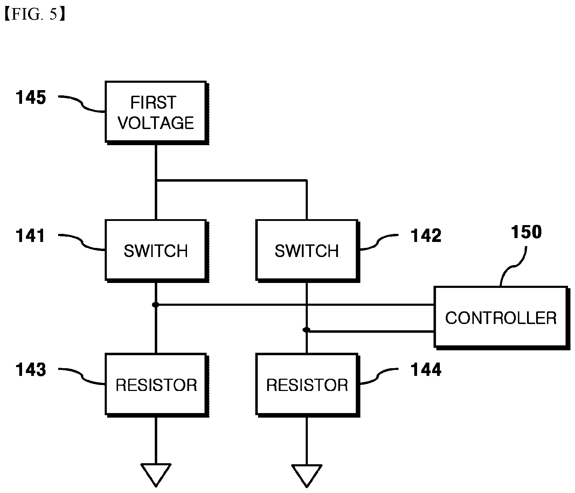

To enable the switches (141, 142) to have a state value of 0 or 1 depending on the state of the switch (141, 142), the power conversion device may include a resistor (143) connected at one end to the switch (141) and at the other end to ground (GND), and a resistor (144) connected at one end to the switch (142) and at the other end to ground, as shown in FIG. 5. Each of the switches (141, 142) may be connected to a first voltage (145), and each of the nodes between the switches and the resistors connected to each other may be connected to the controller (150) to communicate a state value to the controller (150). Here, the first voltage may have a voltage value corresponding to the state value 1. The controller (150) may be a micro control unit (MCU) within the power conversion device (101), or may be an externally located MCU.

When one switch (141) is off, the first voltage (145) is not passed to the controller (150) through the node to which the switch (141) is connected, and a state value of 0 corresponding to ground is passed to the controller (150) through the resistor (143). When the switch (141) is turned on, a first voltage (145) is passed to the controller (150) through the switch (141) and the node to which it is connected, such that a state value of 1 corresponding to the first voltage is passed to the controller (150).

When the other switch (142) is off, the first voltage (145) is not passed to the controller (150) through the node to which the corresponding switch (142) is connected, and a state value of 0 corresponding to ground is passed to the controller (150) through the resistor (144). When the switch (142) is turned on, a first voltage (145) is passed to the controller (150) through the switch (142) and the node to which it is connected, such that a state value of 1 corresponding to the first voltage is passed to the controller (150).

Depending on the ON or OFF state of each of the switches (141, 142), two state values are passed to the controller (150). Here, the digit value of one switch (141) may be greater than the digit value of the other switch (142). This allows four different identification numbers to be set.

The identification number can be set to 00 when switch (141) is off and switch (142) is off, 01 when switch (141) is off and switch (142) is on, 10 when switch (141) is on and switch (142) is off, and 11 when switch (141) is on and switch (142) is on. In this case, 00 can be set as master, 01 as slave 1, 10 as slave 2, and 11 as slave 3. The identification of master and slave may vary depending on the order of charging or discharging.

The state of the switches (141, 142) may be set differently for each of the power conversion devices (101 to 101-n) connected in parallel so that they have different identification numbers.

The identification number set as described above is used to perform communication, and the communication unit (160) can perform communication with the outside using the identification number set as described above. Here, the communication unit (160) may perform communication through various communication methods. For example, various communication methods such as CAN communication, RS485 communication, etc. may be used.

The controller (150) may communicate with an outside, such as the inverter (20), via the identification number set above, to control the power conversion unit (110) to convert power according to the operation control signal received from the outside.

The power conversion unit (110) may include a housing (111) disposed inside, and the switches (141, 142) for setting the identification number may be formed as physical switches exposed on the outside of the housing (111). If the switches (141, 142) are formed inside the housing, it may be difficult to change the identification number, so the switches (141, 142) may be formed to be exposed outside the housing (111) so that the identification number can be set or changed by manipulating the switches (141, 142) as needed.

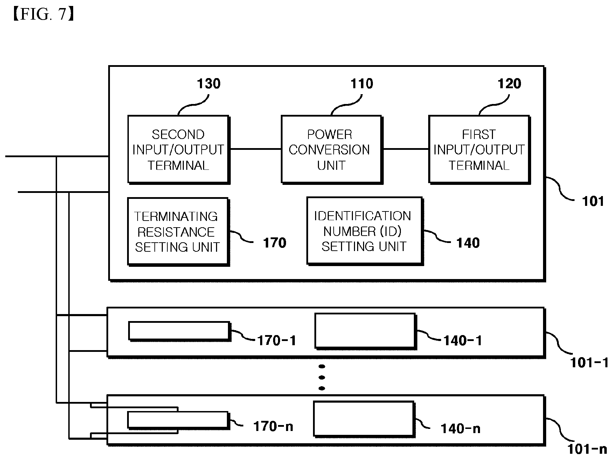

The power conversion device may include a terminating resistance setting unit (170) to connect a terminating resistance when set to an identification number corresponding to a termination when connected in parallel with another power conversion device. When connecting a plurality of power conversion devices in parallel, a terminating resistance may be connected to the power conversion device connected to the termination. When the signal for communication passes through the impedance, a reflection phenomenon occurs, and the signal may be weakened and noisy due to the reflection shape, making it difficult to operate properly. To solve these problems, a terminating resistance can be connected at the end of the line to circulate a constant current throughout the line, reducing reflections and making it more resistant to noise. This allows for smooth communication. If the power conversion device to be connected to a termination is fixed, the terminating resistance can be connected to the power conversion device, but if the identification number can be changed so that a power conversion device that can be connected to any location is set to an identification number corresponding to the termination, the terminating resistance setting unit (170) connects the terminating resistance. As shown in FIG. 7, the terminating resistance is connected at the power conversion device (101-n) connected to the termination.

The terminating resistance setting unit (170) may include a terminating switch (171) that connects the terminating resistance when set to an identification number corresponding to the termination when connected in parallel with another power conversion device. The terminating switch (171) may be connected to a front end of the second input/output terminal (130). It can be connected between the (+) and (-) terminals of the second input/output terminal (130).

The terminating switch (171) may include a plurality of switches for connecting or disconnecting the terminating resistance according to a communication method with the outside. Different communication methods may require different terminating resistances, and by including a plurality of switches, the switches can be controlled to a state suitable for each communication method.

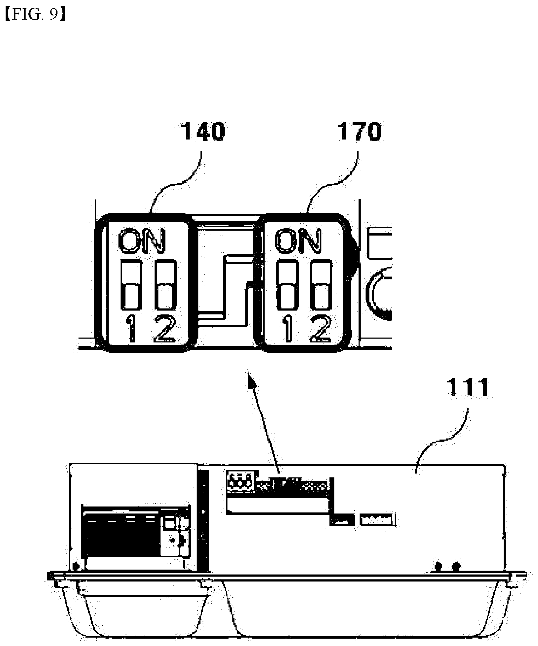

The terminating switch (171) may also be formed as a physical switch exposed outside of the housing (111). When the identification number is set to 11, which corresponds to the termination according to the setting of the switches (141, 142) that set the identification number, it is necessary to connect a terminating resistance, and the terminating switch (171) can be turned on to connect the terminating resistance. As shown in FIG. 9, the switch (140) for setting the identification number and the switch (170) for connecting or disconnecting the terminating resistance can be formed on the outside of the housing (111) to be physically set by an operator.

Here, the physical switch may be implemented by changing its position, such as by increasing and decreasing, or it may be implemented by pressing a button.

As described above, by setting the identification number using a switch, it is possible to change the identification number after installation in the field, so that it can be installed without restrictions on installation, and it is possible to produce one type of product in production and set the identification number at the time of installation, which improves the freedom of logistics management.

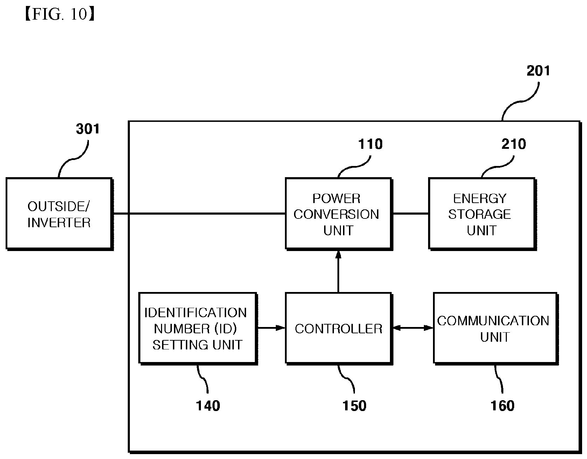

FIG. 10 is a block diagram of an energy storage device (aks ESS) according to a first exemplary embodiment of the present invention. The detailed description of each configuration in FIG. 10 corresponds to the detailed description of the power conversion device (101) in FIGS. 3 to 9, and the energy storage device according to the first embodiment of the present invention will be described hereinafter, with redundant descriptions omitted.

The energy storage device (201) according to the first embodiment of the present invention may include an energy storage unit (210) comprising one or more batteries, a power conversion unit (110) for converting power stored in the energy storage unit (210) and outputting it to an external/inverter (301), or converting power received from the external/inverter (301) and charging the energy storage unit, a controller (150) for controlling the power conversion unit (110), an identification number setting unit (140) for setting an identification number according to an ON-OFF state, and a communication unit (160) for communicating with the inverter or the external/inverter (301) using the identification number, wherein the identification number has a different identification number from the other energy storage devices connected in parallel.

Here, the identification number setting unit (140) may include at least one switch. The switch for setting the identification number may include two switches, and may include a resistor connected to one switch with one end connected to ground and a resistor connected to the other switch with the other end connected to ground. The one switch and the other switch may each be connected to a first voltage at one end, and a node between the resistors connected to each switch may be connected to the controller (150).

The switch for setting the identification number may be formed as a physical switch exposed on the outside of the housing of the energy storage device. It may also include one or more terminating switches that connect terminating resistances when set to an identification number corresponding to the termination when connected in parallel with another energy storage device.

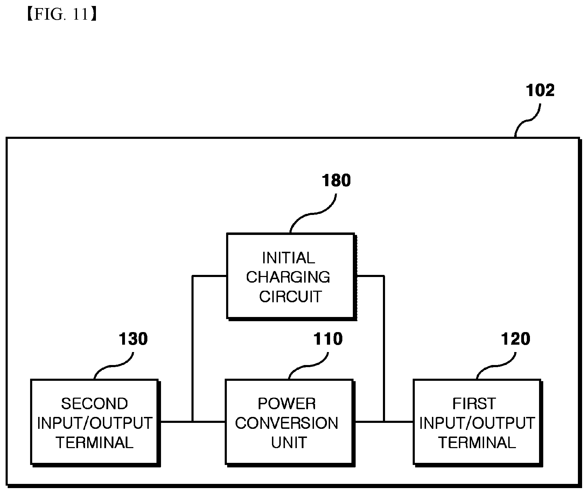

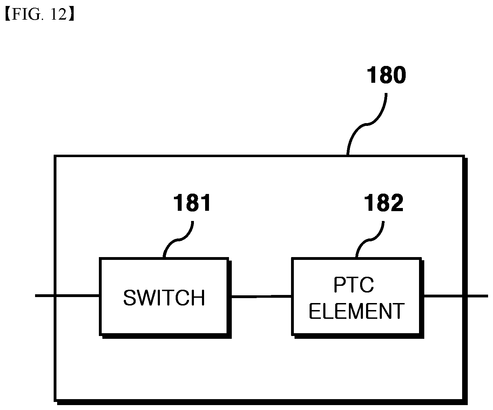

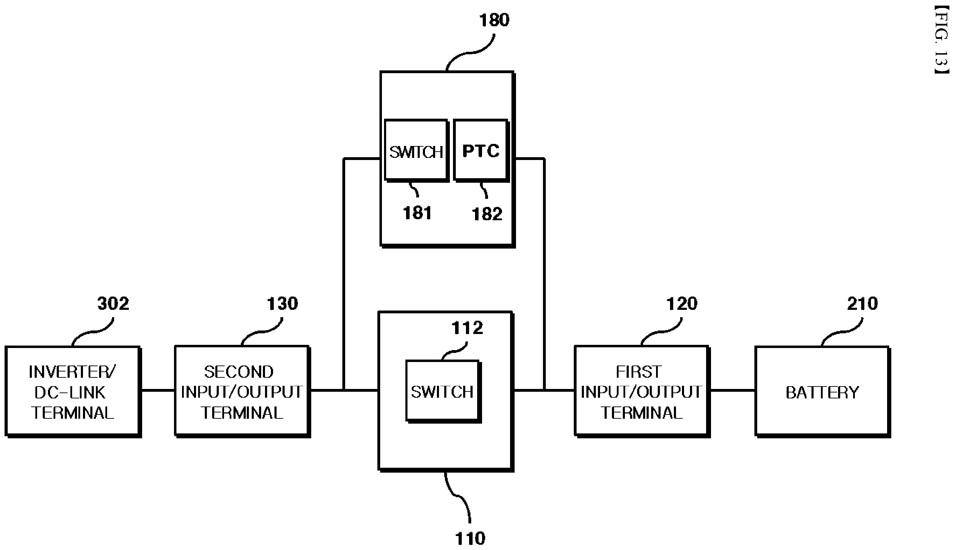

FIG. 11 is a block diagram of a power conversion device according to a second exemplary embodiment of the present invention, and FIGS. 12 to 14 are drawings to illustrate the power conversion devices according to the second exemplary embodiment of the present invention.

The power conversion device (102) according to the second embodiment of the present invention may include an initial charging circuit (180). As described above, the power conversion device (101) according to the first embodiment of the present invention may be a DC-DC converter applied to an energy storage system (ESS) such as a battery pack, and when the input and output terminals are connected to an inverter or a DC link terminal, an initial charge is required to prevent the device from burning out due to a sudden large current flowing due to a voltage difference. That is, before connecting an inverter or the like to the second input/output terminal (130), the voltage of the second input/output terminal (130) must be charged using the voltage inputted to the first input/output terminal (120), and an initial charging circuit (180) is used for this purpose. Here, the energy storage device may be a non-isolated energy storage device, and in the event of a short circuit in the inverter circuit or the like, current may flow continuously from the initial charging circuit to the second input/output terminal, causing damage to the elements of the initial charging circuit.

To prevent current from continuously flowing in the initial charging circuit, the initial charging circuit (180) according to a second embodiment of the present invention may include a switch (181) connected between the first input/output terminal (120) and the second input/output terminal (130) and a PTC element (182) in series connection with the switch (181). Here, the switch (181) is turned on until the voltage of the second input/output terminal (130) corresponds to the voltage of the first input/output terminal (120). When the switch (181) is turned on, a path is formed between the first input/output terminal (120), the switch (181), and the second input/output terminal (130), and current flows through the path, causing a voltage to rise on the second input/output terminal (130).

The first input/output terminal (120) may be connected to the battery (210), and the second input/output terminal (130) may be connected to the inverter or DC-link terminal (302), i.e., the battery (210) voltage is used to charge the voltage on the second input/output terminal (130) so that the second input/output terminal (130) can be reliably connected to the inverter or DC-link terminal (302).

The second input/output terminal (130) may include a capacitor (113) connected to the second input/output terminal (130), and current flowing from the first input/output terminal (120) to the second input/output terminal (130) charges the capacitor (113), thereby increasing the voltage at the second input/output terminal (130). The switch (181) may be turned on until the voltage charged to the capacitor (113) is equal to the voltage of the battery (210).

The switch (181) may include a switch (112) connected in parallel with the switch (181) and a PTC element (182) to form another path, and when the voltage of the second input/output terminal (130) corresponds to the voltage of the first input/output terminal (120), the initial charging is completed, the switch (181) is turned off to stop the initial charging, and the switch (112) is turned on to cause the power conversion unit (110) to perform the power conversion.

However, if a fault occurs in the inverter circuit or the like, such as a short circuit, the short circuit causes an overcurrent to flow continuously from the first input/output terminal (120) to the second input/output terminal (130) at the time of initial charging. In this case, if the overcurrent flows continuously, the switch (181) for initial charging may be burned out, and excessive voltage consumption of the battery may occur.

In this case, if the current flowing through the switch (181) and the PTC element (182) exceeds a threshold (value), the PTC element (182) can cut off the current. The PTC element (182) is a passive element with a positive temperature coefficient (PTC) characteristic, which means that its resistance increases as the temperature of the element increases. When the temperature rises, the resistance increases to prevent overcurrent from flowing. Unlike the case of using a general resistor element, which causes burnout when an overcurrent flows, by connecting the PTC element (182) in series with the switch (181), the overcurrent can be blocked according to the characteristics of the PTC element (182).

If an overcurrent flows, it may exceed the charging capacity of the capacitor (113) as described above, which may cause the capacitor (113) to burn out. To interrupt the overcurrent before the capacitor (113) burns out, the specification of the PTC element (182) can be determined, i.e., the specification of the PTC element (182) can be determined such that it can protect the capacitor according to the design specifications of the capacitor and is compatible with the capacity and type of capacitor.

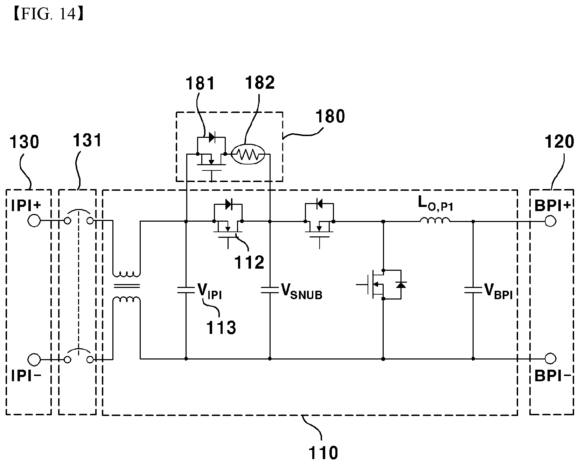

As shown in FIG. 14, a power conversion device according to a second exemplary embodiment may comprise a first input/output terminal (120) with a battery power interface (BPI) connected to a battery, a second input/output terminal (130) with an inverter power interface (IPI) connected to an inverter, a power conversion unit (110) that converts and outputs the incoming power, and an initial charging circuit (180) that initially charges the second input/output terminal (130) using the voltage of the battery. In this case, the initial charging may be performed by charging the capacitor (113) in the power conversion unit.

The first input/output terminal (120) and the second input/output terminal (130) are connected in parallel with a path comprising the switch (181) and the PTC element (182) comprising the initial charging circuit (180) and a path comprising the switch (112), and current flows in the path comprising the switch (181) and the PTC element (182) at the time of initial charging. In the event of a malfunction, such as a short circuit between the (+) and (-) terminals of the inverter side, an overcurrent may flow, and depending on the characteristics of the PTC element (182), the overcurrent may cause the temperature to rise and the resistance to increase, thereby blocking the overcurrent. A circuit breaker (131) may be connected to the second input/output terminal (130) to cut off the connection to the inverter in the event of a fault.

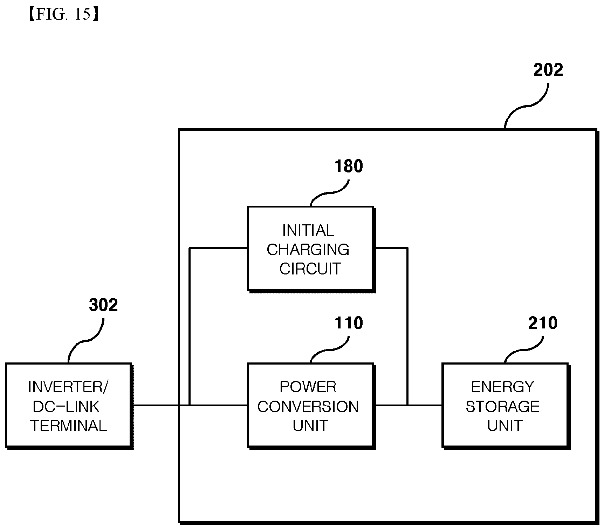

FIG. 15 is a block diagram of an energy storage device according to a second exemplary embodiment of the present invention. The detailed description of each configuration in FIG. 15 corresponds to the detailed description of the power conversion device (102) in FIGS. 11 to 14, and the energy storage device according to the second embodiment of the present invention will be described hereinafter, with redundant descriptions omitted.

An energy storage device (202) according to a second exemplary embodiment of the present invention may include an energy storage unit (210) comprising one or more batteries, a power conversion unit (110) for converting power stored in the energy storage unit (210) and outputting it to the outside, or converting power received from the outside and charging the energy storage section, and an initial charging circuit (180) for initially charging a voltage of a second input/output terminal (130) to which the power conversion unit (110) is connected to the outside. The initial charging circuit (180) may include a switch (181) connecting the energy storage unit (210) and the second input/output terminal (130), and a PTC element (182) in series with the switch (181), and the switch (181) may be turned on until the voltage of the second input/output terminal (130) corresponds to the voltage of the energy storage unit (210).

Here, the second input/output terminal (130) may be connected to an inverter or DC-link terminal (302), and when the current flowing through the switch (181) and the PTC element (182) is above a threshold, such as when a short occurs in the inverter (302), the temperature of the PTC element (182) may increase, causing the resistance value to increase and blocking the current. When the switch (181) and the PTC element (182) include a switch (112) in parallel connection with the switch (181) and the PTC element (182), and the voltage of the second input/output terminal (130) corresponds to the voltage of the energy storage unit (210), the switch (181) may be turned off and the second switch (112) may be turned on.

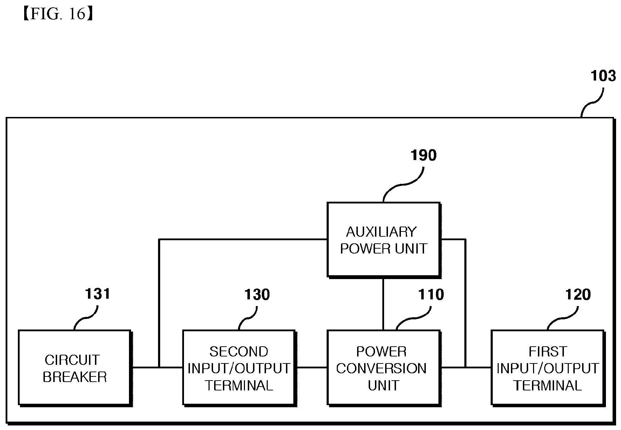

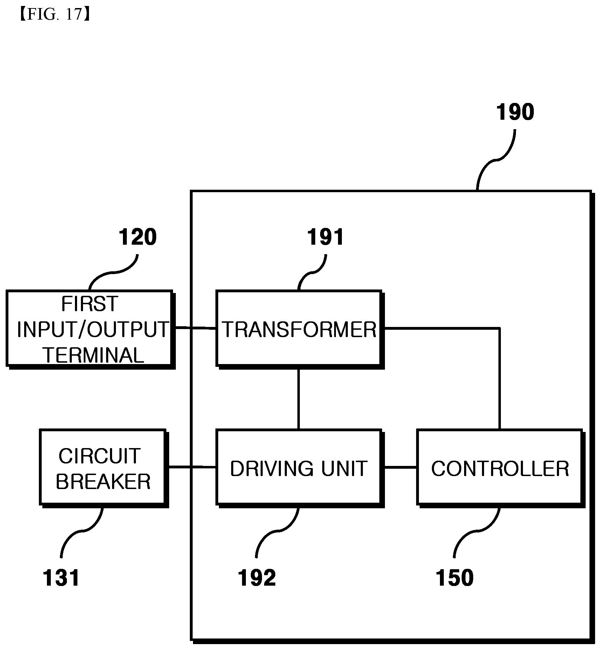

FIG. 16 is a block diagram of a power conversion device according to a third exemplary embodiment of the present invention, and FIGS. 17 to 21 are drawings to illustrate the power conversion devices according to the third embodiment of the present invention.

The power conversion device (103) of the third embodiment of the present invention may include an auxiliary power unit (190). As described above, the power conversion device (103) according to the third embodiment of the present invention may be a DC-DC converter applied to an energy storage system (ESS) such as a battery pack, and requires an auxiliary power source to operate a switch or the like that is switched when power is converted. If the energy storage device is not connected to the inverter, in order to prevent unnecessary power consumption, an auxiliary power ON/OFF control switch can be applied to prevent battery power from being consumed to generate auxiliary power, in addition to a circuit breaker to disconnect the connection to the inverter. In order to operate the DC-DC converter normally, the auxiliary power ON/OFF control switch is turned on, which is inconvenient for the user, and when the switch is turned off during normal operation, an irregular sequence may occur, causing damage to internal components. In addition, when the breaker is turned off by a protective action, the auxiliary power is also turned off immediately, and there is a problem that there is no time to save the log of the breaker turn-off due to the DC-DC converter fault situation.

To solve this problem, in order to generate an auxiliary power source without an auxiliary power ON/OFF control switch and to prevent the auxiliary power source from being turned off immediately when the breaker is turned off, the auxiliary power unit (190) is configured to start when a breaker (131) is turned on and to stop running after a predetermined period of time when the breaker (131) is turned off.

The auxiliary power unit (190) receives the power of the first input/output terminal (120) of the power conversion unit (110), which converts the input power and outputs it, to generate the auxiliary power of the power conversion unit (110). The auxiliary power unit (190) may include a circuit breaker (131) connected to the second input/output terminal (130) of the power conversion unit (110), wherein the circuit breaker (131) is driven when the circuit breaker (131) is turned on, and stops driving after a predetermined period of time when the circuit breaker (131) is turned off.

The auxiliary power unit (190) may include a transformer (191) that converts power from the first input/output terminal (120), a driving unit (192) that drives the transformer (191) according to a first signal that is applied from the breaker (131) when the breaker (131) is turned on, and a controller (150) that receives the auxiliary power outputted from the transformer (191) and controls the driving unit (192) to drive the transformer (191). Here, the transformer may be a transformer. The auxiliary power unit (190) may be configured as shown in FIG. 17.

The driving unit (192) is connected to the breaker (131) and receives a signal from the breaker (131). The driving unit (192) may receive a first signal from the breaker (131) when the breaker (131) is turned on and a second signal when the breaker (131) is turned off. The first signal may be an enable signal to drive the driving unit (192), and the second signal may be a disable signal to stop the driving unit (192). When the circuit breaker (131) is turned on, the power conversion unit (110) must operate, and to do so, an auxiliary power source must be generated. When the circuit breaker (131) is turned on, the first signal is applied to the driving unit (192), and when the driving unit (192) is actuated, the power of the first input/output terminal (120) is applied to the transformer (191), and the auxiliary power is generated through the transformer (191). The auxiliary power unit (190) is operated by turning on the circuit breaker (131), so that a separate switch for turning the auxiliary power supply on and off is not required. This can reduce material costs, simplify the sequence of operations, and eliminate the hazards associated with forcing the auxiliary power on/off switch.

When the auxiliary power is generated, the auxiliary power is applied to the controller (150), and the controller (150) may cause a control signal to be applied to the driving unit (192) to control the driving unit (192) to drive the transformer (191) when the auxiliary power is applied. At this time, a signal corresponding to the first signal may be applied to the driving unit (192) through the control of the controller (150)..

The driving unit (192) may maintain the driving of the transformer in at least one of the cases where a first signal is applied from the breaker (131) and where the controller (150) is controlled to drive the transformer. The driving unit (192) is actuated when a first signal is applied from the breaker (131) and a signal corresponding to the first signal is applied by a control operation of the controller (150). **In** other words, the driving unit (192) maintains the driving by the enable signal applied through the breaker (131) or the controller (150) to maintain the driving of the transformer. **In** other words, even if a second signal other than the first signal is applied from the breaker (131), the driving unit (192) can maintain the driving by the signal applied through the controller (150). **In** this way, an Oring circuit structure can be configured to operate when at least one of the two conditions is satisfied.

The controller (150) may control the driving unit (192) to maintain the driving of the transformer (191) for a predetermined period of time when the breaker (131) is turned off and a second signal is applied from the breaker (131). When the breaker (131) is turned off, the second signal rather than the first signal is applied, but the signal applied to the driving unit (192) by the controller (150) can be controlled to maintain the enable signal. Instead of immediately stopping generating the auxiliary power when the breaker (131) is turned off, the driving unit (192) can be controlled to keep the transformer (191) running for as long as necessary for reliable stopping and log storage. The time for which the driving unit (192) controls the transformer (191) to remain running may be the time required to store the log, and may be set by the user. Alternatively, the time may be a preset time to maintain auxiliary power in the event of a transient fault where the breaker (131) is switched back on immediately after the breaker (131) is turned off.

The controller (150) may store log information including at least one of the following: previous operation information, fault status, fault type, and fault location while the driving unit (192) maintains operation of the transformer (191). It is necessary to store the log information to store historical information or fault occurrence information so that the product can be repaired or replaced. The controller (150) may maintain the auxiliary power even when the breaker (131) is turned off to allow time to store the log information, and may store the log information. The controller (150) may include one or more memories. Alternatively, log information may be stored in a separate memory or transmitted externally.

The auxiliary power unit (190) may include a first switch (194) connected at one end to the first input/output terminal (120), a transformer (191) connected at the other end of the first switch (194) to convert the power of the first input/output terminal (120), and a driving unit (192) connected to the primary (-) terminal of the transformer and driving the transformer (191) according to a first signal applied from the breaker (131) when the breaker (131) is turned on, a capacitor (196) that is charged according to the output of the transformer (191) to generate an auxiliary power source, a second switch (195) having one end connected to a first node between the breaker (131) and the driving unit (192) and the other end connected to ground, and a controller (150) that receives the auxiliary power source and turns on the second switch (195).

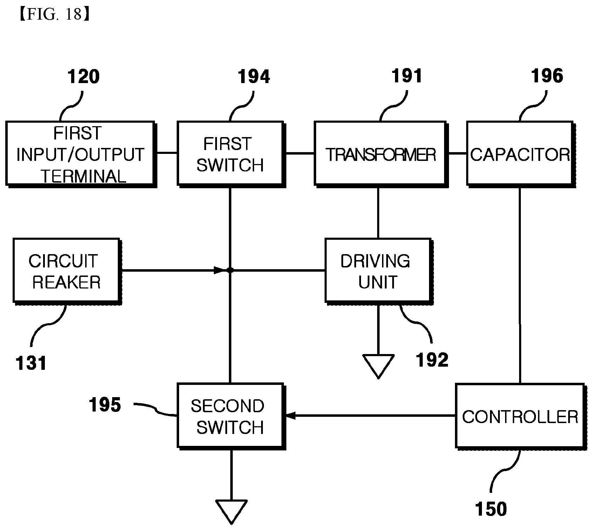

As shown in FIG. 18, when a first signal is applied from the circuit breaker (131) to the driving unit (192), the driving unit (192) is enabled. The first switch (194) may be a MOSFET and a gate may be connected to the first node, and current may flow through the first input/output terminal (120), the first switch (194), the primary side of the transformer (191), and the driving unit (192), and current may be outputted to the secondary side of the transformer (191) to charge the capacitor (196) and generate auxiliary power. Here, the first signal applied from the breaker (131) may have a potential corresponding to ground. For example, it may be 0 V. As such, the generated auxiliary power is used to operate the power conversion unit (110). The auxiliary power is also delivered to the controller (150), which may control the power conversion unit (110) to operate.

In addition, the controller (150) may turn on the second switch (195) to cause the driving unit (192) to be connected to ground via the second switch (195). As previously described, the enable signal for the driving unit (192) is a signal corresponding to ground, so that when connected to ground via the second switch (195), the enable is maintained even if no first signal is received from the breaker (131). In other words, the enable signal for the driving unit (192) may have an Oring circuit structure.

The driving unit (192) may maintain the driving of the transformer (191) in at least one of the cases where the first signal is applied from the breaker (131) and where the second switch is on.

Even if the breaker (131) is turned off and the second signal rather than the first signal is applied, the controller (150) can keep the second switch (195) turned on to keep the driving unit (192) connected to ground, thereby keeping the driving unit (192) running and preventing the auxiliary power from shutting down. The continuously generated auxiliary power may be used to provide time to store the log information and prevent it from burning out due to sudden auxiliary power interruptions.

The controller (150) can switch to a minimum power mode by stopping the auxiliary power generation by turning off the second switch (195) when the log storage is completed, thereby disconnecting the connection between the driving unit (192) and the ground to prevent an enable signal from being applied to the driving unit (192). This prevents over-discharging of the battery (210) connected to the first input/output terminal (120).

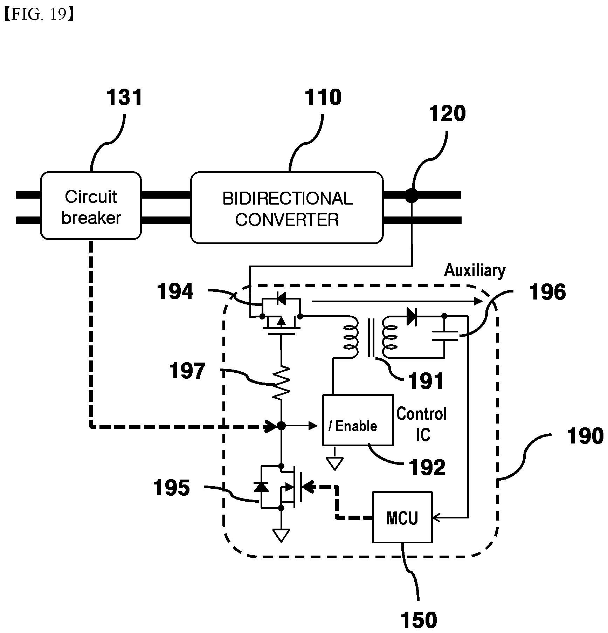

The power conversion device according to a third exemplary embodiment of the present invention may be implemented as shown in FIG. 19. A control IC, which is a driving unit (192), is connected to receive an enable signal from a circuit breaker (131) connected to a one end of the bidirectional converter, which is a power conversion unit. A first switch (194) connected to the other end of the power conversion unit (110), a transformer (191) having a primary side connected to the first switch (194), and a driving unit (192) connected to the primary side of the transformer (191) are connected. The gate of the first switch (194) is connected to a node between the circuit breaker (131) and the driving unit (192). A diode and capacitor (196) are connected to the secondary side of the transformer (191) to generate an auxiliary power source by charging it. The capacitor (196) is connected to the output end of the controller (150), the MCU, which delivers a control signal to turn off the second switch (195) in response to the application of the auxiliary power. The second switch (195) is connected to the driving unit (192) at one end and to ground at the other end.

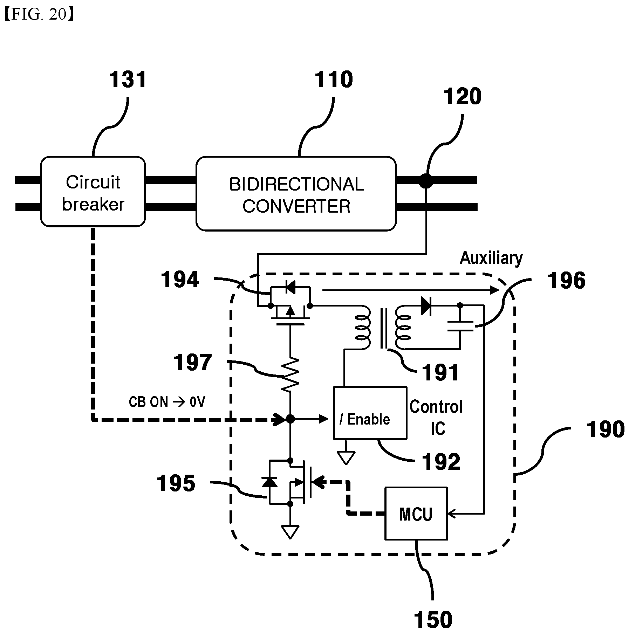

In the above circuit, as shown in FIG. 20, when the breaker (131) is turned on, a 0 V signal is applied from the breaker (131) to the driving unit (192). The enable signal of the driving unit (192) is 0 V, thereby driving the driving unit (192), causing current to flow through the driving unit (192), causing current to flow through the first switch (194), the transformer (191), and charging the capacitor (196) on the secondary side of the transformer (191) to generate auxiliary power. The auxiliary power is applied to the controller (150), and the second switch (195) is turned on to form an OR condition of the enable signal to the driving unit (192) together with the breaker (131).

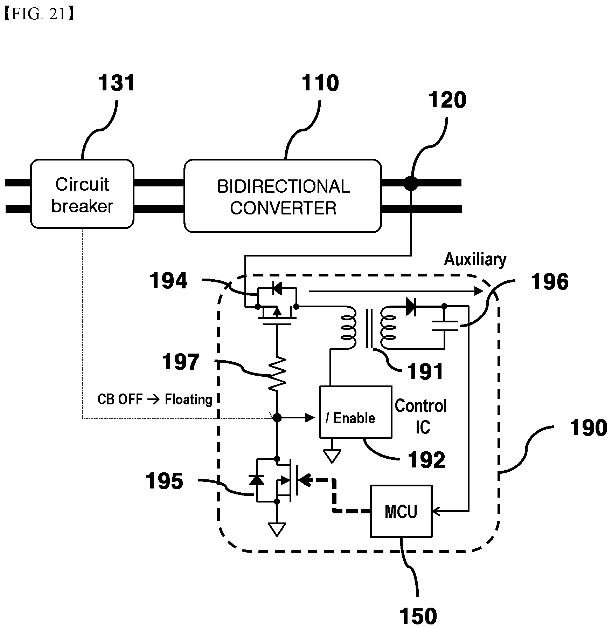

Then, as shown in FIG. 21, when the circuit breaker (131) is turned off, a nonzero floating signal is applied from the circuit breaker (131) to the driving unit (192). This may be a floating voltage corresponding to the battery voltage. Even if a disable signal is applied from the breaker (131), the enable signal of the driving unit (192) remains at 0 V according to the previously established OR condition, and the auxiliary power generation is maintained. When the breaker (131) is turned off, the information is passed to the controller (150), which maintains the auxiliary power and performs housekeeping to store logs of the power conversion device and the battery. After storing the log information, including whether a fault has occurred, the type of fault, and the cause of the fault, the controller (150) turns off the second switch (195) to stop generating the auxiliary power and switches to a minimum power consumption mode to prevent the battery from over-discharging.

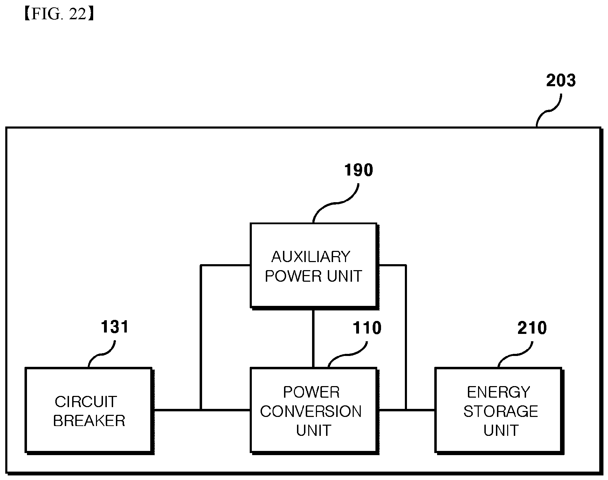

FIG. 22 is a block diagram of an energy storage device according to a third exemplary embodiment of the present invention. The detailed description of each configuration in FIG. 22 corresponds to the detailed description of the power conversion device (103) in FIGS. 16 to 21, and the energy storage device according to the third embodiment of the present invention will be described hereinafter, with redundant descriptions omitted.

An energy storage device (203) according to a third embodiment of the present invention may comprise an energy storage unit (210) comprising one or more batteries, a power conversion unit (110) that converts power stored in the energy storage unit (210) and outputs it to the outside, or converts power received from the outside and charges the energy storage unit (210), an auxiliary power unit (190) for generating an auxiliary power for the power conversion unit (110) by receiving power from the first input/output terminal (120) of the power conversion unit (110) that is connected to the energy storage unit (210), and a circuit breaker (131) that is connected to the second input/output terminal (130) of the power conversion unit (110) that is connected to the outside. The auxiliary power unit (190) may be driven when the breaker (131) is turned on, and may stop driving after a predetermined period of time when the breaker (131) is turned off.

The auxiliary power unit (190) may include a transformer (191) for converting power of the first input/output terminal (120), a driving unit (192) for driving the transformer (191) in accordance with a first signal applied from the breaker (131) when the breaker (131) is turned on, and an auxiliary power outputted from the transformer (191), a controller (150) controlling the driving unit (192) to drive the transformer (191), the driving unit (192) being capable of maintaining the driving of the transformer (191) in at least one of the cases where the first signal is applied from the breaker (131) and where the driving unit (192) is controlled to drive the transformer (191) by the controller (150).

Furthermore, the auxiliary power unit (190) may include a first switch (194) connected at one end to the first input/output terminal (120), a transformer (191) connected at the other end of the first switch (194) to convert the power of the first input/output terminal (120), and a driving unit (192) connected to the primary side (-) terminal of the transformer (191) to drive the transformer (191) according to a first signal applied from the breaker (131) when the breaker (131) is turned on, a capacitor (196) that is charged according to the output of the transformer (191) to generate an auxiliary power, a second switch (195) having one end connected to a first node between the breaker (131) and the driving unit (192) and the other end connected to ground, and a controller (150) that receives the auxiliary power and turns the second switch (195) on.

Here, the first signal has a potential corresponding to the ground, and when the second switch (195) is turned on, ground is connected to the first node, causing the driving unit (192) to drive the transformer (191), and the driving unit (192) may maintain the driving of the transformer (191) in at least one of the cases of when the first signal is applied from the breaker (131) and when the second switch (195) is turned on.

Variations according to the present embodiments can include configurations of all of the first to third embodiments. It may also include some of the configurations of the first embodiment, some of the configurations of the second embodiment, or some of the configurations of the third embodiment. It can also include some configurations of the first embodiment and some configurations of the second embodiment, some configurations of the first embodiment and some configurations of the third embodiment, or some configurations of the second embodiment and some configurations of the third embodiment.

The features, structures, effects, etc. described above in the embodiments are included in at least one embodiment and are not necessarily limited to any one embodiment. Further, the features, structures, effects, etc. exemplified in each embodiment may be combined or modified in other embodiments by one having ordinary skill in the art to which the embodiments belong. Accordingly, such combinations and modifications should be construed to be within the scope of the embodiments.

One of ordinary skill in the art to which the present embodiments relate will understand that they may be implemented in modified form without departing from the essential features of the above described materials. The disclosed methods are therefore to be considered from an illustrative and not a limiting point of view. The scope of the invention is shown in the claims of the patent and not in the foregoing description, and all differences within that scope are to be construed as being included in the invention.

## Claims

1. An initial charging circuit, comprising:
a first switch connected between a first input/output terminal and a second input/output terminal; and
a PTC element connected in series with the first switch,
wherein the first switch is turned on until a voltage of the second input/output terminal corresponds to a voltage of the first input/output terminal.

2. The initial charging circuit of claim 1, wherein, when a current flowing through the first switch and the PTC element is above a threshold value, the PTC element cuts off the current.

3. The initial charging circuit of claim 1, wherein the first input/output terminal is connected to a battery, and the second input/output terminal is connected to an inverter or a DC-link terminal.

4. The initial charging circuit of claim 3, comprising:
a first capacitor connected to the second input/output terminal,
wherein the first switch is turned on until a voltage charged to the first capacitor is equal to a voltage of the battery.

5. The initial charging circuit of claim 1, comprising:
a second switch connected in parallel with the first switch and the PTC element,
wherein, when the voltage of the second input/output terminal corresponds to the voltage of the first input/output terminal, the first switch is turned off and the second switch is turned on.

6. An energy storage device, comprising:
an energy storage unit comprising one or more batteries;
a power conversion unit configured to convert power stored in the energy storage unit and output it to outside, or convert power received from the outside and charging the energy storage unit;
an initial charging circuit configured to initially charge a voltage of a second input/output terminal connected to the outside,
wherein the initial charging circuit comprises:
a first switch connecting the energy storage unit and the second input/output terminal; and
a PTC element connected in series with the first switch,
wherein the first switch is turned on until a voltage of the second input/output terminal corresponds to a voltage of the energy storage unit.

7. The energy storage device of claim 6, wherein, when a current flowing through the first switch and the PTC element is above a threshold value, the PTC element cuts off the current.

8. The energy storage device of claim 6, wherein the second input/output terminal is connected to an inverter or a DC-link terminal.

9. The energy storage device of claim 6, comprising:
a first capacitor connected to the second input/output terminal,
wherein the first switch is turned on until a voltage charged to the first capacitor is equal to a voltage of the battery.

10. The energy storage device of claim 6, comprising:
a second switch connected in parallel with the first switch and the PTC element,
wherein, when the voltage of the second input/output terminal corresponds to the voltage of the energy storage unit, the first switch is turned off and the second switch is turned on.
